# FASCICULE DE BREVET EUROPEEN

(11) **EP 0 682 876 B1**
(45) Date de publication et mention de la délivrance du brevet: **14.10.1998**
(21) Numéro de dépôt: 95401153.2
(22) Date de dépôt: 18.05.1995
(51) Int. Cl.: A23L 1/20, A23L 1/211

(54) **Procédé de fabrication d'une purée de légumineuses déshydratées instantanée**
Verfahren zur Herstellung eines getrockneten Schnellkochhülsenfrüchtepürees
Method for manufacturing an instant, dehydrated legume puree

(30) Priorité: 20.05.1994 FR 9406190
(43) Date de publication de la demande: 22.11.1995
(73) Titulaire: Soufflet Alimentaire, F-59300 Valenciennes (FR)
(72) Inventeur: Pruvot, Yvan Gilbert, 59300 Famars (FR); Dath, Jean-Marc Jules Désiré, 59300 Valenciennes (FR); Baret, Jean-Luc, 77250 Veneux-Les-Sablons (FR)
(74) Mandataire: Colas, Jean-Pierre

(56) Documents cités:
- EP-A- 0 184 015
- EP-A- 0 449 697
- DE-A- 2 726 109
- FR-A- 2 391 656

## Description

L'invention concerne un procédé de fabrication d'une purée de légumineuses déshydratées instantanée.

Les légumineuses telles que pois cassés, pois chiches, haricots blancs, etc.... nécessitent de longues durées de cuisson, éventuellement précédées d'un long trempage, pour pouvoir être consommées. Ces légumes secs sont donc peu adaptés à la vie moderne actuelle qui laisse peu de temps à la plupart des ménagères pour préparer les repas.

Il serait donc utile de pouvoir disposer, à l'instar de ce qui existe pour la pomme de terre, de purées instantanées de légumineuses déshydratées précuites.

Des purées instantanées de légumineuses déshydratées et un procédé pour leur fabrication ont déjà été proposées par EP-B-0 184 015, mais il ne semble pas, à la connaissance de la Demanderesse, que ces purées aient été commercialisées. Le procédé de préparation décrit requiert un long trempage des graines dans l'eau, une cuisson à la vapeur pendant 40-60 mn des grains trempés, et une conversion en purée après la cuisson.

Le but poursuivi par EP-B 0 184 015 est de fournir un produit à digestibilité retardée, caractérisé par un index de digestion inférieur à 30, d'un intérêt particulier pour les personnes obèses et/ou diabétiques.

Il existe donc un besoin pour un procédé de fabrication d'une purée instantanée de légumineuses déshydratées qui soit rapide à mettre en oeuvre et économique, tout en fournissant un produit pouvant être cuisiné selon des recettes savoureuses.

L'invention vise à satisfaire ce besoin.

Plus particulièrement, l'invention concerne un procédé de fabrication d'une purée de légumineuses déshydratées instantanée, caractérisé en ce qu'il comprend les étapes suivantes :
a) broyage de graines de légumineuses entières en particules et tamisage éventuel de celles-ci de façon qu'au moins 70% en poids des particules aient une granulométrie de 150 à 850 µm et au plus 30% en poids des particules aient une granulométrie inférieure à 150 µm ;
b) ajout aux particules résultantes d'un émulsifiant ;
c) cuisson-extrusion du mélange de particules et d'émulsifiant obtenu à l'étape (b), après addition d'eau, dans une extrudeuse à deux vis chauffée ;
d) broyage du produit cuit extrudé obtenu à l'étape c) en particules et tamisage éventuel de celles-ci de façon qu'au moins 70% des particules aient une granulométrie de 150 à 600 µm et au plus 30% en poids des particules aient une granulométrie inférieure à 150 µm ; et
e) facultativement incorporation aux particules obtenues en d) d'additifs alimentaires et/ou épices.

Le broyage de l'étape (a) doit être effectué dans des conditions telles qu'au moins 70% en poids des particules produites aient une grosseur comprise entre 150 et 850 µm, de préférence entre 180 et 710 µm, et qu'au plus 30% en poids des particules aient une granulométrie inférieure à 150 µm, de préférence inférieure à 180 µm (tamis UNI 2332). Le broyage peut être réalisé dans divers types d'installations, mais d'excellents résultats ont été obtenus avec un broyeur à cylindres, tant avec des pois cassés qu'avec des pois chiches et des haricots blancs.

Il faut minimiser la proportion de fines particules (<150 µm) car celles-ci tendent à donner une purée de texture collante et avec grumeaux ainsi que celle des grosses particules (>850 µm) car ces dernières ont tendance à donner une purée de texture granuleuse désagréable. De préférence, au moins 70% en poids de particules produites ont une grosseur comprise entre 180 et 710 µm et au plus 30% en poids des particules ont une grosseur inférieure à 180 µm.

Après le broyage de l'étape (a) et avant la cuisson-extrusion de l'étape (c), il convient d'ajouter au broyat obtenu en (a) un agent émulsifiant tel que, par exemple, du monostéarate de glycérol (additif alimentaire E471). L'agent émulsifiant est de préférence ajouté à sec, sans dilution avec de l'eau, contrairement aux préconisations fournies par les fabricants. Le rôle de l'agent émulsifiant est de faciliter l'extrusion de l'étape (c) et, aussi, d'améliorer la texture de la purée finale produite qui, sans cet ajout, tend à être visqueuse et collante. La proportion d'agent émulsifiant à incorporer dépend de l'agent particulier dont il s'agit. Dans le cas du monostéarate de glycérol, une proportion de 0,5 à 1,5% en poids, de préférence de 0,8 à 1,2%, sera habituellement satisfaisante. A titre purement indicatif, on peut utiliser un mélangeur à rubans pour mélanger l'agent émulsifiant au broyat.

On incorpore ensuite de l'eau au broyat additionné d'agent émulsifiant de façon à pouvoir former une pâte extrudable. Cet apport d'eau peut se faire avant l'introduction du broyat dans l'extrudeuse ou, mieux, dans la section d'alimentation de l'extrudeuse. L'eau incorporée est de préférence ajoutée à un pH approprié pour l'agent émulsifiant utilisé. Dans le cas du monostéarate de glycérol, le pH est avantageusement réglé à environ 7-8.

La quantité d'eau précise à ajouter dépend de la légumineuse particulière, de la granulométrie du broyat, du type et de la quantité d'agent émulsifiant, du type d'extrudeuse et des conditions d'extrusion. Cependant, cet ajout d'eau sera habituellement compris entre environ 9 et environ 15% en poids du broyat.

La pâte de broyat émulsifié est alors cuite en la faisant passer dans une extrudeuse à deux vis chauffée. La température de consigne dans la section chauffée de l'extrudeuse est habituellement comprise entre 130 et 180°C, de préférence entre 150-170°C. Il est à noter que la température de consigne sus-indiquée n'est pas la température de cuisson réelle à laquelle sont soumises les particules dans l'extrudeuse. La température de cuisson réelle est plus élevée que la température de consigne mais est très difficile à mesurer en pratique car elle résulte aussi de la chaleur engendrée par le travail mécanique auquel sont soumises les particules dans l'extrudeuse. Le temps de séjour de la matière dans l'extrudeuse peut être, à titre indicatif, de 20 à 50 secondes, de préférence de 25 à 45 secondes.

Le produit cuit est habituellement extrudé en brins, à la sortie de l'extrudeuse, à travers une filière à trous, puis découpé en granulés avant d'être soumis à l'étape de broyage (d). Le broyage et le tamisage éventuel de l'étape (d) doivent être tels qu'il y ait au plus 30% en poids de particules inférieures à 150 µm et au moins 70% en poids de particules d'une grosseur comprise entre 150 et 600 µm pour éviter de donner une texture granuleuse à la purée finale. De préférence, il y a au plus 30% en poids de particules inférieures à 180 µm et au moins 70% en poids de particules comprises entre 180 et 450 µm.

Avantageusement, le broyage (d) est effectué dans un broyeur à marteaux équipé d'une grille ou tamis retenant les particules trop grossières éventuelles, mais l'emploi d'un autre type de broyeur, comme un broyeur à cylindres, est possible.

Facultativement, la légumineuse à traiter peut être soumise avant ou au cours de l'étape (c) à un traitement enzymatique par une enzyme, telle qu'une alpha-amylase, en vue d'améliorer la capacité de la purée à se réhydrater, la digestibilité de la purée et surtout la viscosité et la texture de la purée, une alpha-galactosidase en vue de réduire la teneur en alpha-galactosides (substances considérées comme peu digestibles et facteurs de flatulence), une phytase pour réduire la teneur en phosphate phytique peu assimilables, ou un mélange de telles enzymes.

Le traitement enzymatique peut se faire sur la matière broyée additionnée d'eau avant l'étape (c) ou en cours d'extrusion, les enzymes étant ajoutées avec l'eau d'appoint normalement ajoutée juste avant ou au début de l'extrusion.

La farine ou poudre de légumineuse obtenue après l'étape de broyage (d) peut ensuite être facultativement additionnée de divers additifs alimentaires, épices ou aromates.

On peut par exemple ajouter un agent conservateur alimentaire, tel que la vitamine C ou acide L-ascorbique cristallisé très pur (additif E300).

On peut aussi ajouter un agent améliorant la texture, par exemple de l'extrait de levures. Un tel agent est efficace surtout dans le cas de la purée de haricots blancs.

Du lait écrémé en poudre peut être aussi ajouté.

Enfin divers épices et/ou aromates peuvent être incorporés à la purée pour en relever le goût, citons par exemple : l'acide glutamique alimentaire (exhausteur de goût), arôme de légumes ou de mélanges de légumes, arôme ail-persil, arôme citron-tomate, arôme cumin-paprika, fonds de sauces, etc...

Un colorant alimentaire peut aussi être ajouté pour conférer à la purée une couleur appétissante.

La purée de l'invention se prépare facilement et rapidement par simple adjonction d'eau chaude, de lait chaud ou d'un mélange chaud d'eau et de lait.

Les exemples non limitatifs suivants sont donnés dans le but d'illustrer l'invention.

### Exemples 1 à 3

Dans ces exemples, on a utilisé une installation constituée des appareils suivants :
- pour l'étape (a) : broyeur à cylindres suivi d'un planchister (ensemble de tamis animés d'un mouvement de rotation couramment utilisé en meunerie) ;
- pour l'étape (b) : mélangeuse à rubans ;
- pour l'étape (c) : extrudeuse formée de deux modules BC 72 de 300 mm de longueur chaque, vendus par la Société CLEXTRAL, 1 rue du colonel Riez, B.P. 10, 42702 FIRMINY (France) présentant les caractéristiques suivantes :
   - longueur totale des fourreaux : 600 mm
   - 2 vis corotatives d'un diamètre de 88 mm dont les axes sont distants de 72,5 mm
   - puissance du moteur électrique : 55 kW
   - capacité de traitement : 100 à 200 kg/heure
   - pas de vis (de l'entrée à la sortie) : 66 (200 mm), 35 (100 mm) et 28 (300 mm)
   - dispositif de chauffage électrique par induction (induthermes) d'une puissance de 20 Kw prévu entre 325 et 525 mm
   - filière à 12 trous
   - granulateur : à 3 lames
- pour l'étape (d) : broyeur à marteaux LAW équipé d'une grille-tamis à ouvertures de 1 mm et ensemble de bluterie ou tamis pour recycler en amont du broyeur les particules supérieures à 450 µm
- pour l'étape (e) : mélangeur à hélice.

On a procédé à la préparation de purées instantanées à partir de pois cassés, de pois chiches et de haricots blancs, respectivement, à l'aide de l'installation sus-décrite :

Dans l'étape (a), les graines de légumineuses ont été broyées et tamisées de façon à obtenir un broyat ou farine, formé de 70% en poids de particules comprises entre 180 et 710 µm, et de 30% en poids de particules d'une taille inférieure à 180 µm.

A chaque broyat obtenu, on a incorporé 1% en poids de DIMODAN PV (monostéarate de glycérol (E471) vendu par la Société GRINDSTEDT FRANCE, Parc d'activités Pissaloup 78190 Trappes, à l'état pur (sans dilution) dans la mélangeuse à rubans.

Les broyats additionnés du E 471 ont été placés dans la trémie d'alimentation de l'extrudeuse CLEXTRAL et on a mis en marche cette dernière, tout en introduisant dans la section d'alimentation de l'extrudeuse de l'eau ajustée à pH 8 et provenant d'un bac de réserve.

Les conditions opératoires de l'extrudeuse sont récapitulés dans le tableau ci-après :

| Nature de la légumineuse | Haricots blancs | Pois cassés | Pois chiches |
|---|---|---|---|
| Consignes d'entrée | | | |
| Repère eau réglé à | 75 | 75 | 65 |
| Débit en eau (l/h) | 26,85 | 26,85 | 23,27 |
| T°C | 150 | 150-160 | 170 |
| Vis (trs/mn) | 245 | 245 | 245 |
| Doseur matière réglé à | 100 | 100 | 120 |
| Débit matière (kg/h) | 218 | 218 | 262 |
| Granulateur (trs/mn) | 1830 | 2590-2410 | 2000-1620 |

| Données de sortie | | | |
|---|---|---|---|
| Ampérage (A) | 84 | 80-84 | 62-58 |
| Masse spécifique de l'extrudat (kg/m³ | 376 | 290-260-280 | 532-516 |
| Humidité (%) | 10,98 | 10,24 | 9,26 |
| Cendres (%) | 3,65 | 2,92 | 2,17 |

Les brins d'extrudat sortant de l'extrudeuse sont découpés en granules par le granulateur et les granules résultants (10 mm environ) sont broyés dans le broyeur à marteaux en particules. Les farines obtenues présentent environ 30% de particules d'une taille inférieure à 180 µm, le complément, soit environ 70% en poids étant compris entre 180 et 450 µm.

Les farines résultantes sont alors mélangées dans un mélangeur à hélice avec les additifs et aromates indiqués dans le tableau ci-dessous.

| Nature de la légumineuse | Pois cassé | Pois chiche | Haricot Blanc |
|---|---|---|---|
| Conservateur | | | |
| vitamine C (Merck) | 300 mg/kg | 300 mg/kg | 300 mg/kg |

| Aromates | | | |
|---|---|---|---|
| Ail-Persil RéfD317 (Laboratoire PYC) | - | 0,5 % | 0,33 % |
| Mirepoix quatre légumes Ref212-220 (Aromont) | - | 0,5 % | 0,66 % |

| Agent texturant | | | |
|---|---|---|---|
| Extrait de levure type standard 18 (BioSpringer) | - | - | 1 % |

Les compositions de purée instantanée ainsi formulées peuvent alors être emballées. Un emballage opaque, par exemple en complexe polyéthylène-aluminium, est préféré, notamment pour la composition à base de pois cassés dont la couleur est altérée par la lumière.

Pour la préparation de la purée, il suffit de mélanger la composition de purée avec une quantité appropriée d'eau chaude, ou de lait chaud ou de mélange eau-lait chaud. A titre indicatif, pour obtenir de la purée pour deux personnes, on peut mélanger 110 g de la composition de pois cassés ou 95 g de la composition à base de pois chiches ou 120 g de la composition à base de haricots blancs, avec 1/3 litre d'eau. Bien entendu, ces proportions peuvent être modifiées selon la consistance de purée désirée.

Les purées résultantes ont été jugées bonnes par un ensemble de consommateurs. Les purées instantanées de l'invention se prêtent bien aussi à la réalisation de recettes savoureuses.

### Exemple 4

Dans cet exemple, on a étudié l'effet d'une addition d'alpha-amylase au début de l'étape de cuisson-extrusion sur la viscosité de la purée, sans chercher à observer rigoureusement, par ailleurs, les conditions opératoires définies précédemment, notamment en ce qui concerne la granulométrie de la légumineuse.

Dans cet exemple, on a utilisé une installation constituée d'un broyeur à marteaux LAW équipé d'une grille-tamis à ouvertures de 1,5 mm pour réaliser les étapes de broyage avant et après la cuisson-extrusion, et une extrudeuse CLEXTRAL BC45 à 2 vis corotatives pour réaliser la cuisson-extrusion.

L'extrudeuse CLEXTRAL BC45 comportait un fourreau de 1000 mm de long et était équipée d'une filière à 8 trous et d'un granulateur à 2 lames.

La vitesse de rotation des vis était de 200 t/mn. L'extrudeuse comportait enfin des éléments de chauffage électrique par induction (induthermes).

L'étape (b) et l'étape (c) ont été réalisées comme décrit pour les exemples 1-3. On a procédé à la préparation de purées déshydratées à partir de pois cassés et de pois entiers à deux températures de cuisson (120 et 140°C) en ajoutant une préparation d'alpha-amylase thermostable du commerce commercialisée par la Société NOVO NORDISK sous la marque déposée Termanyl 120L à raison de 0,5% en poids par rapport au poids de légumineuse traitée. Par ailleurs, on a préparé des purées déshydratées témoins dans des conditions similaires sauf que l'alpha-amylase n'était pas utilisée.

On a mesuré la viscosité apparente, à 25°C, de purées obtenues à partir des purées déshydratées en ajoutant 30 g de purée déshydratée à 150 g d'eau à 95°C.

Les résultats sont récapitulés dans le tableau suivant:

| Légumineuse | Pois cassé | | Pois entier | |
|---|---|---|---|---|
| Température de cuisson-extrusion, °C | 120 | 140 | 120 | 140 |
| Viscosité des purées témoins, Pa.s | 5,48 | 6,28 | 6,01 | 9,87 |
| Viscosité des purées préparées avec traitement à l'α-amylase | 3,52 | 4,75 | ND | 4,19 |
| ND = non déterminée | | | | |

Ces résultats montrent que le traitement enzymatique réduit la viscosité apparente de la purée, ce qui est favorable pour l'appréciation sensorielle du produit. Egalement, le traitement enzymatique améliore la texture de la purée. Il est à noter que les purées préparées pour ces déterminations de la viscosité ne correspondaient pas à des préparations adaptées à la dégustation, étant plus liquides pour des raisons de commodité de mesure.

Il va de soi que les modes de réalisation décrits ne sont que des exemples et qu'on pourrait les modifier, notamment par substitution d'équivalents techniques, sans sortir pour cela du cadre de l'invention.

## Revendications

1. Procédé de fabrication d'une purée de légumineuses déshydratées instantanée, caractérisé en ce qu'il comprend les étapes suivantes :
a) broyage de graines de légumineuses en particules et tamisage éventuel de celles-ci de façon qu'au moins 70% en poids des particules aient une granulométrie de 150 à 850 µm et au plus 30% en poids des particules aient une granulométrie inférieure à 150 µm ;
b) ajout aux particules résultantes d'un émulsifiant ;
c) cuisson-extrusion du mélange de particules et d'émulsifiant obtenu à l'étape (b), après addition d'eau, dans une extrudeuse à deux vis chauffée ;
d) broyage du produit cuit extrudé obtenu à l'étape c) en particules et tamisage éventuel de celles-ci de façon qu'au moins 70% en poids des particules aient une granulométrie de 150 à 600 µm et au plus 30% en poids des particules aient une granulométrie inférieure à 150 µm ; et
e) facultativement incorporation aux particules obtenues en d) d'additifs alimentaires et/ou épices.

2. Procédé selon la revendication 1, caractérisé en ce qu'après l'étape (a), au moins 70% en poids des particules ont une granulométrie de 180 à 710 µm et au plus 30% en poids des particules ont une granulométrie inférieure à 180 µm.

3. Procédé selon la revendication 1 ou 2, caractérisé en ce qu'après l'étape (d), au moins 70% en poids des particules ont une granulométrie de 180 à 450 µm et au plus 30% en poids des particules ont une granulométrie inférieure à 180 µm.

4. Procédé selon la revendication 1, 2 ou 3, caractérisé en ce que la température de consigne de l'extrudeuse est réglée entre 130 et 180°C.

5. Procédé selon l'une quelconque des revendications 1 à 4, caractérisé en ce que le temps de séjour des particules dans l'extrudeuse est de 20 à 50 secondes.

6. Procédé selon l'une quelconque des revendications 1 à 5, caractérisé en ce que le broyage (a) est effectué dans un broyeur à cylindres.

7. Procédé selon l'une quelconque des revendications 1 à 6, caractérisé en ce que le broyage (d) est effectué dans un broyeur à marteaux.

8. Procédé selon l'une quelconque des revendications 1 à 7, caractérisé en ce que les additifs facultativement ajoutés dans l'étape (c) sont choisis dans le groupe constitué des épices, des aromates, des exhausteurs de goût, des agents conservateurs, des extraits de levure, et des colorants alimentaires.

9. Procédé selon l'une quelconque des revendications 1 à 8, caractérisé en ce qu'il comprend l'étape supplémentaire (f) consistant à ajouter aux particules de légumineuses, avant ou pendant l'étape (c), au moins une enzyme choisie dans le groupe constitué par les alpha-amylases, alpha-galactosidases et les phytases.

10. Purées produites par un procédé tel que défini à l'une quelconque des revendications 1 à 9.

## Claims

1. A method of making an instantaneous puree of dehydrated pulses characterised in that it comprises the following steps:
a) grinding pulses into particles and optionally screening the latter so that at least 70% by weight of the particles have a particle size in the range of 150 µm to 850 µm and at most 30% by weight of the particles have a particle size less than 150 µm;
b) adding an emulsifier to the resulting particles;
c) cooking-extruding the mixture of particles and emulsifier obtained in step (b), after addition of water, in a heated twin-screw extruder;
d) grinding the extruded cooked product obtained in step (c) into particles and optionally screening the latter so that at least 70% by weight of the particles have a particle size in the range of 150 µm to 600 µm and at most 30% by weight of the particles have a particle size less than 150 µm; and
e) optionally incorporating food additives and/or spices into the particles obtained in step (d).

2. A method according to claim 1 characterised in that after step (a) at least 70% by weight of the particles have a particle size in the range of 180 µm to 710 µm and at most 30% by weight of particles have a particle size less than 180 µm.

3. A method according to claim 1 or claim 2 characterised in that after step (d) at least 70% by weight of the particles have a particle size in the range of 180 µm to 450 µm and at most 30% by weight of the particles have a particle size less than 180 µm.

4. A method according to claim 1 or claim 2 or claim 3 characterised in that the temperature setting of the extruder is adjusted between 130°C and 180°C.

5. A method according to any one of claims 1 to 4 characterised in that the residence time of the particles in the extruder is from 20 seconds to 50 seconds.

6. A method according to any one of claims 1 to 5 characterised in that the grinding step (a) is carried out in a roll mill.

7. A method according to any one of claims 1 to 6 characterised in that the grinding step (d) is carried out in a hammer mill.

8. A method according to any one of claims 1 to 7 characterised in that the additives optionally added in step (c) are selected from the group comprising spices, herbs, flavour enhancers, preservatives, yeast extracts and food colorants.

9. A method according to any one of claims 1 to 8 characterised in that it comprises the additional step (f) of adding to the particles, before or during step (c), at least one enzyme selected from the group comprising alpha-amylases, alpha-galactosidases and phytases.

10. Purees produced by a method as defined in any one of claims 1 to 9.

## Patentansprüche

1. Verfahren zur Herstellung eines getrockneten Schnellkochhülsenfrüchtepürees, dadurch gekennzeichnet, daß es die folgenden Schritte aufweist:
a) Zerkleinerung von Hülsenfrüchtenkörnern in Teilchen und gegebenenfalls Sieben derselben, so daß zumindest 70 Gew.-% der Teilchen eine Korngröße von 150 bis 850 µm und zumindest 30 Gew.-% der Teilchen eine Korngröße unter 150 µm haben;
b) Zugabe eines Emulgators zu den resultierenden Teilchen;
c) Kochen-Extrudieren der im Schritt (b) erhaltenen Mischung von Teilchen und Emulgator nach Zufügung von Wasser in einem Extruder mit zwei geheizten Schnecken;
d) Zerkleinerung des im Schritt (c) erhaltenen Kochproduktes in Teilchen und gegebenenfalls Sieben derselben, so daß zumindest 70 Gew.-% der Teilchen eine Korngröße von 150 bis 600 µm und zumindest 30 Gew.-% der Teilchen eine Korngröße unter 150 µm haben; und
e) fakultativ Zusetzen von Nahrungs-Zusatzstoffen und/oder Gewürzen zu den im Schritt (d) erhaltenen Teilchen.

2. Verfahren gemäß Anspruch 1, dadurch gekennzeichnet, daß nach dem Schritt (a) zumindest 70 Gew.-% der Teilchen eine Korngröße von 180 bis 710 µm und zumindest 30 Gew.-% der Teilchen eine Korngröße unter 180 µm haben.

3. Verfahren gemäß Anspruch 1 oder 2, dadurch gekennzeichnet, daß nach dem Schritt (d) zumindest 70 % der Teilchen eine Korngröße von 180 bis 460 µm und zumindest 30 Gew.-% der Teilchen eine Korngröße unter 180 µm haben.

4. Verfahren gemäß Anspruch 1, 2 oder 3, dadurch gekennzeichnet, daß die Solltemperatur des Extruders zwischen 130 und 180 °C eingestellt wird.

5. Verfahren gemäß irgendeinem der Ansprüche 1 bis 4, dadurch gekennzeichnet, daß die Verweilzeit der Teilchen in dem Extruder 20 bis 50 Sekunden beträgt.

6. Verfahren gemäß irgendeinem der Ansprüche 1 bis 5, dadurch gekennzeichnet, daß die Zerkleinerung (a) in einem Walzenbrecher bewirkt wird.

7. Verfahren gemäß irgendeinem der Ansprüche 1 bis 6, dadurch gekennzeichnet, daß die Zerkleinerung (d) in einer Hammermühle bewirkt wird.

8. Verfahren gemäß irgendeinem der Ansprüche 1 bis 7, dadurch gekennzeichnet, daß die fakultativ in dem Schritt (c) hinzugegebenen Zuschlagstoffe ausgewählt sind aus der Gruppe gebildet von Gewürzen, aromatischen Substanzen, Geschmacksverstärkern, Konservierungsmitteln, Hefeextrakten und Lebensmittelfarbstoffen.

9. Verfahren gemäß irgendeinem der Ansprüche 1 bis 8, dadurch gekennzeichnet, daß es den ergänzenden Schritt (f) umfaßt, der darin besteht, den Hülsenfrüchtenteilchen vor oder während des Schrittes (c) zumindest ein Enzym hinzuzufügen, das aus der Gruppe ausgewählt ist, die von den Alpha-Amylasen, Alpha-Galactosidasen und den Phytasen gebildet ist.

10. Püree hergestellt nach einem Verfahren, so wie in irgendeinem der Ansprüche 1 bis 9 definiert.
